# EUROPÄISCHE PATENTANMELDUNG

(11) **EP 1 382 881 A2**
(43) Veröffentlichungstag der Anmeldung: **21.01.2004**
(21) Anmeldenummer: 03016115.2
(22) Anmeldetag: 16.07.2003
(51) Int. Cl.: F16F 1/393

(54) **Befestigungselement**

(30) Priorität: 17.07.2002 DE 10232862
(71) Anmelder: Adolf Würth GmbH & Co. KG, 74653 Künzelsau (DE)
(72) Erfinder: Humm, Siegfried, 74214 Westernhausen (DE); Reuther, Herbert, 74238 Gommersdorf (DE); Sailer, Thomas, 74196 Neuenstadt (DE); Wundling, Herbert, 97199 Ochsenfurt (DE)
(74) Vertreter: Patentanwälte Ruff, Wilhelm, Beier, Dauster & Partner

(57) **Zusammenfassung**

Ein Befestigungselement zur körperschalldämmenden Befestigung von Teilen enthält eine äußere Hülse, die mit der Wand verschraubt wird. Die Hülse (1) weist eine Innenöffnung (5) auf, die aus zwei entgegengesetzt gerichteten Kegelstümpfen (1a,1b) besteht. In der Hülse ist ein Kern (11) angeordnet, dessen Form ebenfalls aus zwei umgekehrt orientierten zusammengesetzten Kegelstümpfen (12,13) besteht. Zwischen den Kegelflächen ist ein Schlauch (14) aus Elastomermaterial angeordnet. Die Befestigung geschieht an dem Kern. Zwischen den beiden Teilen des Befestigungselements besteht keine direkte Verbindung. Durch Voreinstellung kann die Vorspannung in der Belastungsrichtung und quer dazu eingestellt werden.

## Beschreibung

Die Erfindung betrifft ein Befestigungselement, mit dessen Hilfe Gegenstände schalldämmend befestigt werden sollen. Ein Anwendungsbeispiel ist eine Rohrschelle, mit der eine Flüssigkeit führende Leitung an einer Decke eines Raumes befestigt werden soll. Bekannte Rohrschellen dieser Art haben eine dämmende Einlage in Form eines Ringes, der um die Leitung herum gelegt wird und der von der Rohrschelle komprimiert wird. Ein Arbeiten der Leitung, das heißt eine Bewegung gegenüber der festen Schelle, führt dabei zu einer Scherung der elastischen Einlage.

Bei einem bekannten schalldämmenden Befestigungselement ist ein Kopf einer Schraube in einem Block aus Elastomermaterial eingebettet Dies führt zu unterschiedlich starken Belastungen der Elastomereinlage an verschiedenen Stellen. Dadurch besteht die Gefahr einer Beschädigung und sogar Zerstörung des Blocks aus Elastomermaterial.

Ebenfalls bekannt ist ein schalldämmendes Befestigungselement, bei dem eine Rohrschelle mit einer mit der Decke verbundenen Gewindestange in einer speziellen Halterung mit Hilfe von Gummipuffern festgelegt ist. Hier werden die Gummipuffer je nach Art der Belastung auch auf Scherung oder Zug beansprucht.

Der Erfindung liegt die Aufgabe zu Grunde, ein wirkungsvolles, leicht herzustellendes, leicht zu montierendes und wenig Platz benötigendes Befestigungselement zur schalldämmenden Befestigung zu schaffen.

Zur Lösung dieser Aufgabe schlägt die Erfindung ein Befestigungselement mit den im Anspruch 1 genannten Merkmalen vor. Weiterbildungen der Erfindung sind Gegenstand von Unteransprüchen.

Das Befestigungselement enthält zwei Teilelemente, von denen beispielsweise eines an der Decke eines Raumes befestigt wird, während an dem anderen Teilelement die zu halternde Leitung angebracht wird. Durch die Verhinderung eines direkten Kontakts zwischen den beiden Teilelementen mit Hilfe des Dämmelements wird zuverlässig dafür gesorgt, dass kein Schall als Körperschall übertragen werden kann. Durch die Beanspruchung des Dämmelements im wesentlichen auf Komprimierung, wobei an der Komprimierung vorzugsweise das gesamte Dämmelement teilnimmt, erhöht sich die Belastbarkeit und Lebensdauer des Dämmelements und damit des Befestigungselements. Neben der Komprimierung kann auch eine gewisse Scherung auftreten.

Es ist möglich, durch entsprechende Gestaltung der Teilelemente und/oder des Dämmelements dafür zu sorgen, dass ein entsprechender Verschiebungsweg möglich wird. Mit anderen Worten lässt sich die Härte der Befestigung in gewissen Grenzen konstruktiv einstellen.

Die Belastungsrichtung ist diejenige Richtung, in der in die hauptsächliche Belastung des Befestigungselements auftritt und auch diejenige Richtung, in der die Schwingungen auftreten, die gedämpft werden sollen. Erfindungsgemäß kann vorgesehen sein, dass die Wirkungsfläche unter einem spitzen Winkel gegenüber der Belastungsrichtung verläuft.

Es kann ebenfalls vorgesehen sein, dass die Kompression des Dämmelements in einer Richtung erfolgt, die unter einem spitzen Winkel zu der Belastungsrichtung verläuft.

In Weiterbildung der Erfindung kann vorgesehen sein, dass das Dämmelement an den Wirkungsflächen der beiden Teilelemente nur lose anliegt, mit diesen also nicht verbunden ist. Dies erleichtert nicht nur die Herstellung, da weniger Arbeitsschritte erforderlich sind, sondern macht auch einen nachträglichen Austausch oder eine Reparatur möglich.

Ähnlich wie bei der eingangs erwähnten Rohrschelle kann auch bei dem Befestigungselement nach der Erfindung vorgesehen sein, dass es zwei Belastungsrichtungen aufweist, die insbesondere gegenläufig angeordnet sind. In beiden Fällen wird ein Dämmelement im wesentlichen ausschließlich auf Komprimierung beansprucht.

Eine Möglichkeit, wie zwei gegenläufige Belastungsrichtungen verwirklicht werden können, besteht darin, dass mindestens ein Teilelement mehr als eine Wirkungsfläche aufweisen kann. Diese beiden Wirkungsflächen können allerdings auch dann vorhanden und von Nutzen sein, wenn nur eine einzige Belastungsrichtung vorgesehen ist.

Beispielsweise lässt sich das Befestigungselement trotz einer großen Wirkungsfläche klein bauen, wenn die Wirkungsfläche aufgeteilt wird in zwei getrennte Wirkungsflächen. Hierdurch lässt sich beispielsweise ein Befestigungselement mit kleinem Durchmesser bauen.

In Weiterbildung der Erfindung kann vorgesehen sein, dass mindestens eine Wirkfläche mindestens eines Teilelements konisch verläuft, gegebenenfalls abgestuft konisch. Die Konizität kann dazu dienen, durch eine axiale Verschiebung des Konus eine Komprimierung in radialer Wirkung zu erreichen. Je nach Konuswinkel kann auch dafür gesorgt werden, wie groß die Verschiebung zur Erreichung einer bestimmten Kompressionskraft sein soll. Auch hierdurch lässt sich, wie oben bereits angedeutet, die Härte der Befestigung in weiten Grenzen einstellen.

Wenn beispielsweise die Wirkfläche eines der beiden Teilelemente konisch verläuft, die Wirkungsfläche des anderen Teilelements aber nicht, so kann erfindungsgemäß ein Dämmelement verwendet werden, dass eine konische mit einer konischen Wirkfläche eines Teilelements zusammenwirkende Außen- bzw. Innenfläche aufweist. Hier sind also bei zwei miteinander zusammenwirkenden Wirkungsflächen und einem zwischen diesen angeordneten Dämmelement zwei Konusflächen vorhanden. Es ist auch denkbar, drei Konusflächen vorzusehen.

In Weiterbildung der Erfindung kann vorgesehen sein, dass das Dämmelement als zylindrische Hülse ausgebildet und zwischen zwei konischen Wirkflächen angeordnet ist. Auch in diesem Fall führt eine axiale Verschiebung der einen Konusfläche gegenüber der anderen zu einer Komprimierung des Dämmelements in einer Richtung im wesentlichen senkrecht zu der Verschieberichtung.

Erfindungsgemäß kann vorgesehen sein, dass der Konuswinkel zweier einander gegenüberliegender Wirkflächen gleich groß ist. In diesem Fall ist es sinnvoll, als Dämmelement eine zylindrische Hülse mit konstanter Wanddicke zu verwenden. Dadurch wird erreicht, dass die Komprimierung des Dämmelements überall gleich groß ist, sich mit anderen Worten also auf das gesamte Dämmelement in gleicher Weise auswirkt. Dies führt zu einer langen Lebensdauer des Dämmelements.

Es ist aber auch möglich, falls dies im Einzelfall gewünscht ist, dass der Konuswinkel zweier einander gegenüberliegender Wirkflächen verschieden groß ist. Dies kann beispielsweise dazu verwendet werden, dass der Ringspalt zwischen den beiden einander gegenüberliegenden Wirkungsflächen sich in Kegelrichtung vergrößert oder verkleinert.

Wenn mehr als eine Wirkungsfläche an jedem Teilelement vorhanden ist, und diese Wirkungsflächen hintereinander liegen, so kann erfindungsgemäß vorgesehen sein, dass die Kegel in der gleichen Richtung orientiert sind. Dies ist eine Möglichkeit, den Platzbedarf des Befestigungselements beispielsweise in radialer Richtung klein zu gestalten, auch wenn eine große Wirkungsfläche vorhanden sein soll.

Wenn dagegen das Befestigungselement zwei entgegengesetzte Belastungsrichtungen aufweisen soll, so kann erfindungsgemäß vorgesehen sein, dass die Kegel bei mehreren Wirkflächen umgekehrt orientiert sind. Dann führt eine Verschiebung des einen Teilelements in der einen Richtung zu einer zunehmenden Komprimierung des Dämmelements zwischen einem Paar von Wirkflächen, während bei der Belastung in umgekehrter Richtung das andere Dämmelement zwischen dem anderen Paar von Wirkflächen auf zunehmende Komprimierung beansprucht wird.

Die erwähnten Kegel müssen keine Kreiskegel sein, sondern können auch als Bauteile mit einem von einer Kreisform abweichenden Querschnitt ausgebildet sein. So kann beispielsweise ein Bauteil, das die Konusfläche aufweist, die Form eines elliptischen Kegels aufweisen. Auch die Form von Pyramiden und Pyramidenstümpfen ist möglich.

Es ist auch möglich, dass als Wirkungsfläche die Flankenfläche eines Gewindes dient, so dass bei einer nur geringen radialen Ausdehnung des Befestigungselements dennoch eine große Wirkungsfläche zur Dämmung zur Verfügung gestellt werden kann.

Da das Dämmelement im wesentlichen ausschließlich auf Komprimierung beansprucht wird, können die beiden konusartig ausgebildeten miteinander zusammenwirkenden Wirkflächen glatt ausgebildet sein. Es ist aber ebenfalls möglich, beispielsweise um die Montage zu erleichtern, dass eine der beiden Wirkflächen, oder auch beide, mit Rippen, Rillen, Noppen oder dergleichen versehen ist.

Erfindungsgemäß kann das Befestigungselement mit einer Ausfallsicherung versehen sein, die dann, wenn aus irgendeinem Grunde das Dämmelement zerstört wird, ein Auseinanderfallen der beiden Teilelemente verhindert. Diese Ausfallsicherung ist vorzugsweise in erster Linie in der Hauptbelastungsrichtung wirksam. Es ist aber auch möglich, dass sie in einer zweiten oder sogar dritten Belastungsrichtung wirksam ist, also beispielsweise ein Verdrehen des einen Teils des Befestigungselements gegenüber dem anderen Teil verhindert.

Beispielsweise kann eines der beiden Teilelemente eine Hülse sein, bei der die Wirkungsfläche oder mehrere Wirkungsflächen an der radialen Innenseite der Hülse vorhanden ist. Die Hülse kann dabei einseitig offen oder auch beidseitig offen sein.

Erfindungsgemäß kann eines der beiden Teilelemente ein Kern oder dergleichen sein, bei dem die Wirkungsfläche an der radialen äußeren Mantelfläche vorhanden ist.

Die Hülse kann, wie bereits erwähnt, einen Boden aufweisen, um die Innenöffnung einseitig zu begrenzen. Dabei kann der Boden beispielsweise eine zentrale Gewindebohrung zum Anbringen einer Haltungseinrichtung oder zum Anschrauben des entsprechenden Teilelements an einer Wand aufweisen.

Die Befestigung der Hülse kann an ihrer axialen Stirnseite und/oder an ihrem Umfang erfolgen. Dies hängt in erster Linie davon ab, in welcher Weise die Belastungsrichtung des Befestigungselements gestaltet ist.
Erfindungsgemäß kann vorgesehen sein, dass die Hülse mehrteilig ausgebildet und zerlegbar ist. Durch die mehrteilige Ausbildung lassen sich Formen verwirklichen, die sich bei einer einteiligen Ausbildung nur mit größerem Aufwand herstellen lassen.

Der Kern kann beispielsweise eine axiale Gewindebohrung aufweisen, bei der es sich um eine durchgehende oder um eine Sacklochbohrung handeln kann. Diese Bohrung kann ebenfalls dazu dienen, ein Teil an dem Teilelement anzuschrauben.

Erfindungsgemäß kann vorgesehen sein, dass der maximale Durchmesser des Kerns größer ist als der minimale Durchmesser der Innenöffnung der Hülse in Belastungsrichtung. Dies stellt eine sehr einfache Ausfallsicherung dar. Wenn beispielsweise auf Grund eines Brandes das Elastomermaterial zerstört wird, können die beiden Teile nicht auseinander fallen.

Erfindungsgemäß kann vorgesehen sein, dass das Dämmelement vorkomprimiert zwischen den beiden Teilelementen angeordnet wird.

Weitere Merkmale, Einzelheiten und Vorzüge der Erfindung ergeben sich aus der folgenden Beschreibung bevorzugter Ausführungsformen der Erfindung, den Patentansprüchen und der Zusammenfassung, deren Wortlaut durch Bezugnahme zum Inhalt der Beschreibung gemacht wird, sowie anhand der Zeichnung. Hierbei zeigen:
- Figur 1: schematisch einen Längsschnitt durch ein Befestigungselement nach einer ersten Ausführungsform;
- Figur 2: in verkleinertem Maßstab den Schnitt durch das Befestigungselement der Figur 1 mit einer eingesetzten Schraube;
- Figur 3: einen der Figur 1 entsprechenden Schnitt bei einer weiteren Ausführungsform der Erfindung;
- Figur 4: einen der Figur 1 und 3 entsprechenden Schnitt bei einer nochmals weiteren Ausführungsform der Erfindung;
- Figur 5: einen Schnitt durch eine Ausführungsform, bei der eine einzige Belastungsrichtung vorgesehen ist;
- Figur 6: einen Schnitt durch eine weitere Ausführungsform.
- Figur 7: einen der Figur 6 entsprechenden Schnitt durch ein weiteres Befestigungselement;
- Figur 8: eine Stirnansicht des Befestigungselements der Figur 7;
- Figur 9: eine der Figur 7 entsprechende Darstellung bei einer nochmals weiteren Ausführungsform der Erfindung;
- Figur 10: eine Stirnansicht des Befestigungselements der Figur 11 von links;
- Figur 11: eine Aufsicht auf einen Teil eines Befestigungselements;
- Figur 12: einen der Figur 9 entsprechenden Schnitt durch eine Ausführungsform;
- Figur 13: einen schematischen Längsschnitt durch eine Ausführungsform, bei der eine Gewindeflankenfläche als Wirkungsfläche vorhanden ist.

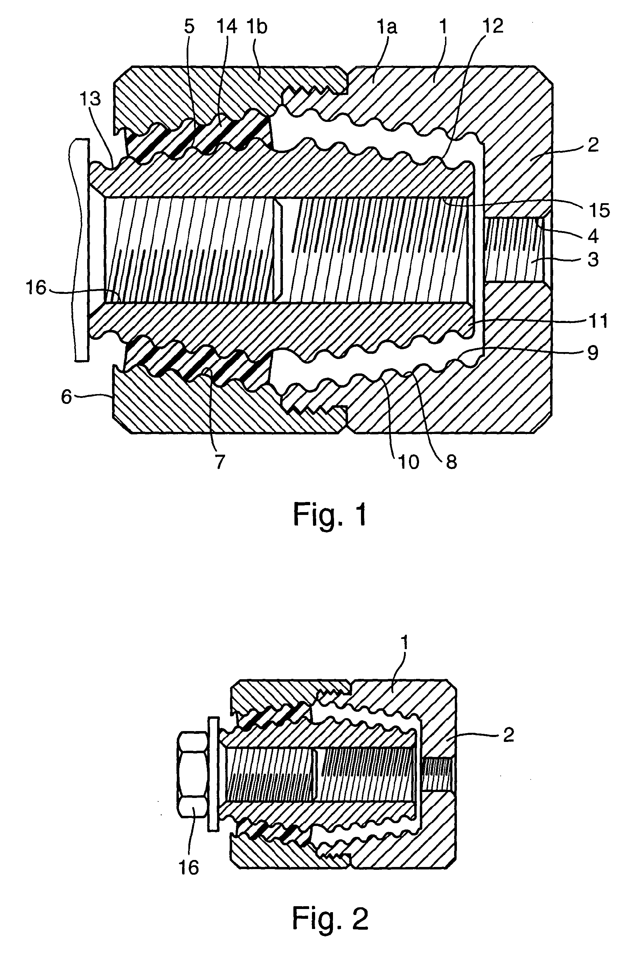

Figur 1 zeigt einen Axialschnitt durch ein Befestigungselement nach der Erfindung. Das Befestigungselement enthält ein erstes Teilelement 1, das die Form einer Hülse mit einem geschlossenen Boden 2 aufweist. In der Mitte des Bodens 2 ist eine axial verlaufende Bohrung 3 mit einem Gewinde 4 angeordnet. Dieses erste Teilelement wird beispielsweise an einer Decke eines Raumes angeschraubt, an der eine Leitung befestigt werden soll. Das Teilelement 1 besteht aus zwei Teilen 1a, 1b, die miteinander verschraubt sind. Das Teilelement enthält eine Innenöffnung 5, die an der einen Seite des Teilelements 1, nämlich der dem Boden 2 abgewandten Seite, nach außen hin offen ist. Der Durchmesser der Innenöffnung 5 vergrößert sich zunächst von der dem Boden 2 abgewandten Stirnseite 6 bis zu der Stelle, wo die beiden Teile 1a, 1b miteinander verschraubt sind. Von dieser Stelle aus verringert sich der Durchmesser wieder, bis er den Boden 2 erreicht. Die Innenwand der Innenöffnung 5 besteht also aus einem ersten Bereich, der etwa kegelförmig ist, und einem zweiten Bereich, der kegelförmig mit umgekehrter Orientierung ist. Beide Bereiche 7,8 bilden je eine Wirkungsfläche. Der Begriff der Wirkungsfläche wird im Folgenden noch erläutert werden. Die Wirkungsflächen 8 weisen konzentrisch umlaufende Rippen 9 auf, die zwischen sich Rillen 10 bilden.

In der Innenöffnung 5 des ersten Teilelements 1 ist ein zweites Teilelement 11 eingesetzt. Dieses Teilelement 11 bildet für das Teilelement 1 einen Kern und wird daher im folgenden auch so bezeichnet. Das zweite Teilelement 11 weist an seiner Außenseite zwei gegenläufig orientierte Kegelstumpfflächen auf, die ebenfalls Wirkungsflächen 12,13 bilden. Die Öffnungswinkel der Kegelflächen 12,13 sind im dargestellten Beispiel gleich und entsprechen auch dem Öffnungswinkel der beiden Wirkflächen 7,8 des ersten Teilelements 1. Zwischen dem Kern 11 und dem ersten Teilelement 1 wird dadurch ein ringförmiger Spalt gebildet, dessen radiale Breite überall die gleiche ist. Jeweils eine kegelförmige Wirkungsfläche 7 beziehungsweise 8 des ersten Teilelements 1 liegt einer kegelförmigen Wirkungsfläche 13, 12 des zweiten Teilelements 11 gegenüber. In dem dadurch gebildeten Ringspalt ist ein Dämmelement eingesetzt, wobei die Figur 1 nur ein Dämmelement 14 zwischen den Wirkflächen 7 und 13 zeigt.

Zwischen den Wirkflächen 8 und 12 wird ein gleiches Dämmelement 14 eingelegt. Beide Dämmelemente sind als kurze Schläuche mit einer zylindrischen Außen- und Innenseite ausgebildet. Es wäre auch denkbar, ein durchgehendes Dämmelement 14 zu verwenden, das dann sich über eine größere axiale Länge erstrecken würde. Das Dämmelement 14 bzw. beide Dämmelemente sind in der dargestellten Position vorkomprimiert. Zwischen dem ersten Teilelement 1 und dem zweiten Teilelement 11 gibt es keine direkte Verbindung und auch keine direkte Berührung. Das zweite Teilelement 11 wird innerhalb des ersten Teilelements 1 nur durch das Dämmelement 14 gehalten.

Das zweite Teilelement 11 kann innerhalb des ersten Teilelements 1 in axialer Richtung nach rechts und nach links etwas verschoben werden, wobei dies jeweils zur Komprimierung eines Dämmelements 14 führt. Die Dämmelemente 14 werden dabei auch ganz geringfügig auf Scherung beansprucht, jedoch liegt die Hauptbeanspruchung in einer Komprimierung, da sich bei einer axialen Verschiebung des Kerns 11 gegenüber dem ersten Teilelement der radiale Abstand zwischen den Wirkflächen 7 und 13 beziehungsweise 8 und 12 ändert.

Wie stark sich bei einer Relativverschiebung zwischen den beiden Teilelementen das Dämmelement 14 komprimiert, hängt von der Größe des Kegelwinkels ab.

Um das Befestigungselement zusammenzusetzen, kann beispielsweise das äußere Teilelement 1 auseinander geschraubt werden. Dann werden auf den Kern von dessen beiden Stirnseiten her die beiden Dämmelemente 14 als Schlauch aufgeschoben, wobei die Verrippung der Oberflächen das Festhalten der Schläuche erleichtert. Anschließend wird der Kern in die Innenöffnung des in Figur 1 rechten Teils der äußeren Hülse eingesetzt und von links her der Teil 1 b aufgeschraubt. Damit ist das Befestigungselement fertig.

Der Kern des Befestigungselements enthält eine durchgehende Bohrung 15, deren nach außen gerichteter Teil mit einem Innengewinde 16 versehen ist.

Das in Figur 1 dargestellte Befestigungselement kann beispielsweise folgendermaßen verwendet werden, siehe hier insbesondere die Figur 2. Das eine Teilelement 1, nämlich die äußere Hülse mit dem geschlossenen Boden 2, kann nach dem Zusammensetzen des Befestigungselements mit Hilfe einer Schraube an einem Träger angeschraubt werden, beispielsweise auch mit Hilfe einer Gewindestange, die in einen Dübel eingreift. Damit ist das Befestigungselement an einer ortsfesten Stelle befestigt. Anschließend kann das an der Decke oder dem Träger anzubringende zu befestigende Teil mit Hilfe einer Schraube 16 an dem Kern 11 angeschraubt werden, wobei das Anschrauben bzw. Festziehen der Schraube 16 noch nichts an der Komprimierung der Dämmelemente 14 ändert. Damit ist das zu befestigende Teil an dem Träger befestigt, wobei es keine Schallbrücke zwischen den beiden Teilen gibt, so dass die Übertragung von Körperschall verhindert wird.

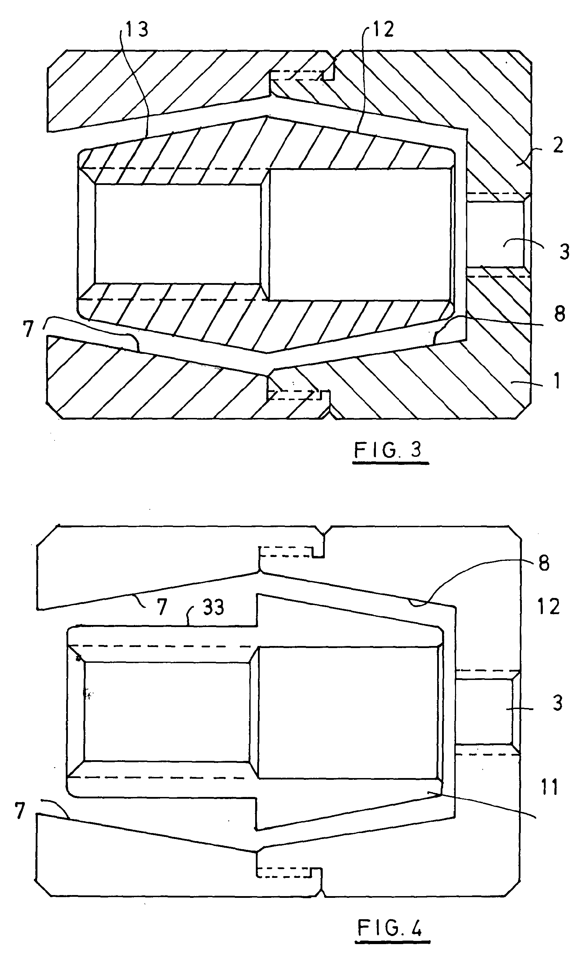

Figur 3 zeigt eine weitere Möglichkeit, wie ein Befestigungselement nach der Erfindung aufgebaut sein könnte. Der wesentliche Unterschied zwischen der Ausführungsform der Figur 1 einerseits und der Ausführungsform der Figur 3 andererseits besteht darin, dass die Wirkflächen 7, 8 des ersten Bauteils 1 und die Wirkflächen 12, 13 des Kerns 11 glatt ausgebildet sind, also ohne Verrippungen, Noppen oder dergleichen. Es soll damit nachgewiesen werden, dass die Festlegung des Kerns 11 in dem ersten Teilelement 1 nicht durch eine Scherung des Dämmelements 14, sondern durch eine Komprimierung dieses Elements in Richtung senkrecht zur Verschiebungsrichtung erfolgt.

Wie man der Figur 3 ebenfalls durch Nachmessen entnehmen kann, ist der maximale Durchmesser des Kerns 11, also etwa in der Mitte, größer als der Durchmesser der Innenöffnung des äußeren Teilelements 1 an der linken Stirnseite, also der Stirnseite, an der die zu befestigende Last abgenommen wird. Dies bedeutet, dass der Kern 11 nur dann in das erste Teilelement 1 eingesetzt werden kann, wenn dieses durch Aufschrauben zerlegt ist. Diese Dimensionierung hat den Vorteil, dass bei Zerstörung der Dämmelemente 14, also beispielsweise im Falle eines Brandes, die Befestigung sich nicht löst. Der Kern 11 bleibt immer mit dem Teilelement 1 verbunden.

Figur 4 zeigt eine Ausführungsform, bei der in der rechten Hälfte die Wirkungsflächen 8, 12 in der gleichen Weise aufgebaut sind wie bei der Ausführungsform nach Figur 3. In der linken Hälfte, also links von der Stelle des größten Durchmessers, ist der Kern 11 zylindrisch. Er weist also eine zylindrische Wirkungsfläche 33 auf, die der konischen Wirkungsfläche 7 gegenüber liegt. Dadurch wird zwischen beiden Wirkflächen 7, 33 ein Ringspalt gebildet, der eine nicht konstante Breite aufweist. Auch diese Art der Ausbildung der zusammenwirkenden Wirkungsflächen kann dazu dienen, die erfindungsgemäße Aufgabe zu lösen. In diesem Fall kann über den zylindrischen Teilen des Kerns 11 ein Dämmelement geschoben werden, das seinerseits eine konische Außenfläche und eine zylindrische Innenfläche aufweist. Auch hier erfolgt dann bei einem Versuch der Verschiebung des Kerns gegenüber dem ersten Teilelement 1 eine Komprimierung dieses Dämmelements.

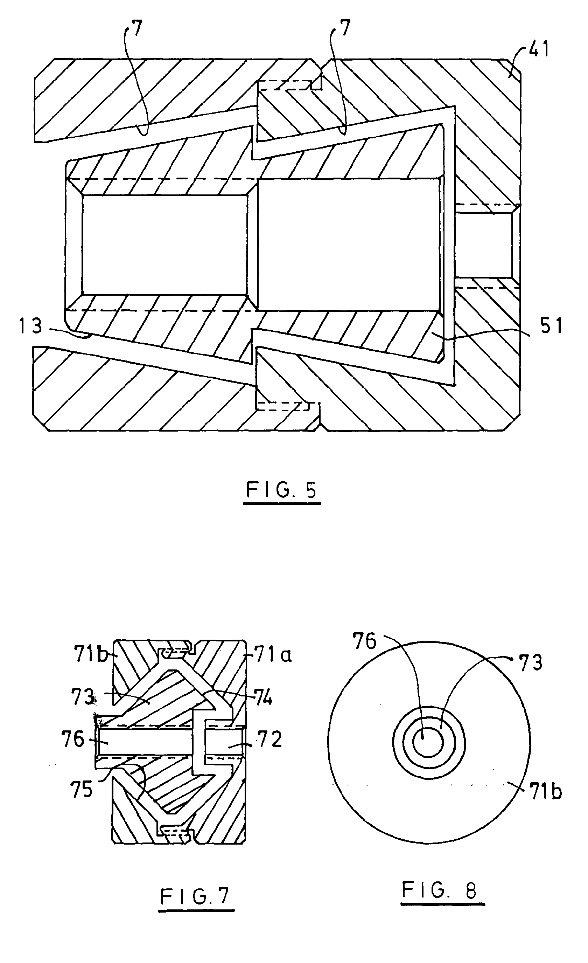

Während bei den bisher abgehandelten Ausführungsformen die Orientierung sowohl des ersten Teilelements 1 als auch des zweiten Teilelements 11 so gewählt war, dass eine Belastung in beiden Richtungen erfolgen kann, zeigt Figur 5 ein Ausführungsbeispiel, bei dem die beiden Teilelemente 41, 51 so orientiert sind, dass eine Belastung nur in einer Richtung aufgenommen wird. Die beiden Teile des Kerns 51 sind kegelförmig ausgebildet, ebenso wie die beiden Abschnitte der Wandung der Innenöffnung. Die beiden zusammenwirkenden Paare von Kegelflächen sind jedoch in der gleichen Richtung orientiert, also mit der Spitze nach links in Figur 5. Dadurch kann dieses Befestigungselement nur zur Aufnahme von Zugkräften dienen, nicht zur Aufnahme von Zug- und Druckkräften. Im übrigen arbeitet das Befestigungselement nach dem gleichen Prinzip wie die vorher abgehandelten Ausführungsformen.

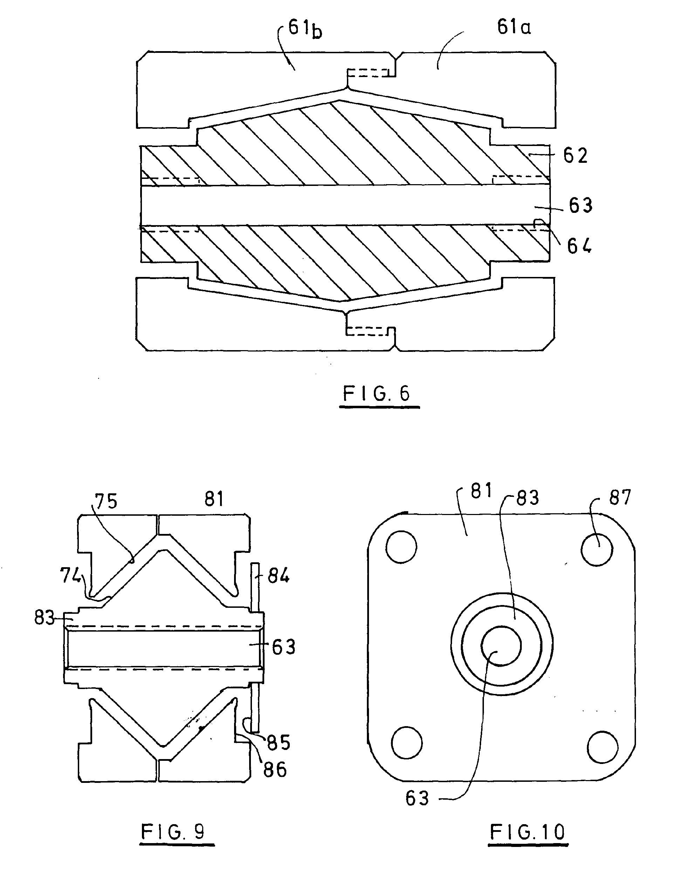

Figur 6 zeigt eine nochmals weitere Ausführungsform, bei der das erste Teilelement 61 zwar die Form einer Hülse aufweist wie bei den bisherigen Ausführungsformen, aber keinen geschlossenen Boden. Das Teilelement ist aus zwei Teilen 61 a, 61 b zusammengeschraubt. Im Inneren ist ein Kern 62 angeordnet, der eine durchgehende Bohrung 63 aufweist. An beiden Austrittsenden der Bohrung 63 ist ein Gewinde 64 vorhanden. Dieses Befestigungselement kann beispielsweise so verwendet werden, dass das erste Teilelement 61 im Bereich seines Mantels an einer Decke oder einem Träger angebracht wird. Dann lässt sich mit dem Kern 62 an jeder Seite ein weiteres Befestigungselement verbinden, wobei die beiden Befestigungseinrichtungen dann beispielsweise in Figur 6 nach unten reichen können. Dadurch ist das zu befestigende Bauteil auch noch in einer dritten Bewegungsrichtung bewegbar, nämlich in einer radialen Richtung gegenüber der Längsachse des Kerns 62.

Figur 7 zeigt eine weitere Ausführungsform eines Befestigungselements, bei der wieder, wie bei den vorhergehenden Ausführungsformen, das auf Kompression beanspruchte Dämpfungselement aus Gründen der besseren Erkennbarkeit nicht eingezeichnet ist. Das Befestigungselement enthält wiederum, ähnlich wie bei der Ausführungsform nach Figur 6, eine äußere Hülse 71, die aus zwei miteinander verschraubten Teilen 71 a und 71 b aufgebaut ist. Eines der beiden Teile, im dargestellten Beispiel das Teil 71 a, bildet einen mit Ausnahme einer Gewindebohrung 72 geschlossenen Boden. Die Gewindebohrung 72 dient dazu, die Hülse 71 zu befestigen. In der Hülse 71 ist ein Kern 73 angeordnet, der zwei umgekehrt orientierter Konusmantelflächen 74 aufweist. Diese Konusmantelflächen 74 bilden die Wirkungsflächen, die den parallel angeordneten Wirkungsflächen 75 der Hülse 71 gegenüberliegender angeordnet sind. In den Zwischenraum zwischen den Wirkungsflächen 74 des Kerns 73 und den Wirkungsflächen 75 der Hülse 71 wird das bereits erwähnte Dämmelement eingelegt. Die Wirkungsflächen 74, 75 verlaufen bei dieser Ausführungsform unter einem Winkel von etwa 45 Grad gegenüber der Hauptbelastungsrichtung, die durch die Achse der Gewindebohrung 72 der Hülse 71 und einer Gewindebohrung 76 des Kerns 73 definiert ist. Der Hauptbelastungsrichtung in Figur 7 verläuft also horizontal. Da bei einer einseitigen Anbringung eines Elements auch Kräfte in einer Richtung quer zur Achse auftreten können, ist hier also ebenfalls wie bei den vorhergehenden Ausführungsform eine zweite Belastungsrichtung vorhanden, die also senkrecht zur Längsachse der Bohrungen verläuft. Auch Kippbewegungen werden durch das Dämmmaterial des Dämmelements gedämpft.

Figur 8 zeigt eine Stirnansicht der Ausführungsform nach Figur 7, und zwar von links in Figur 7. Die Hülse 71 ist im Querschnitt also kreisförmig ausgebildet.

Wegen des unterschiedlichen Winkels zwischen den Wirkungsflächen 74, 75 und der Hauptbelastungsrichtungen treten hier andere Dämpfungseigenschaften bei gleichem Material auf. Bei einer Verschiebung des Kerns um einen bestimmten Betrag tritt eine stärkere Komprimierung des Elastomermaterials auf.

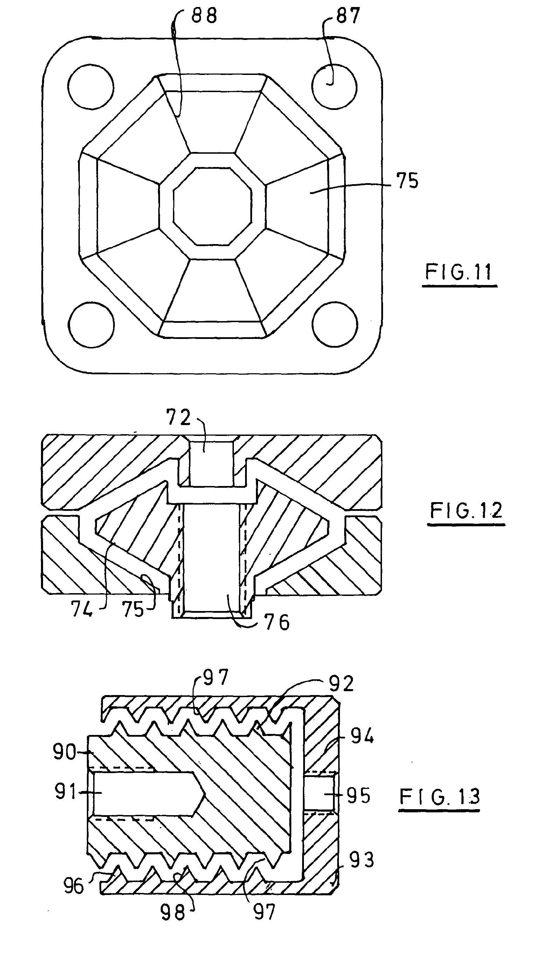

Figur 9 zeigt eine weitere Ausführungsform, bei der die Winkel zwischen den Wirkungsflächen 74 des Kerns 73 und 75 der Hülse 71 die gleiche Größe aufweisen wie bei der Ausführungsform der Figur 7. Die Ausführungsform der Figur 11 ist der Ausführungsform nach Figur 6 insofern etwas ähnlicher, als der Kern 83 von beiden axialen Stirnseiten der Hülse 81 aus zugänglich ist. Der Kern 83 enthält eine durchgehende Gewindebohrung 63, so dass der Kern an seinen beiden Stirnseiten zur Befestigung eines weiterführenden Elements bestimmt ist. Auf den Kern ist von der in Figur 9 rechten Stirnseite her eine Platte 84 aufgelegt, die dort verschraubt werden kann. Zwischen der Innenseite 85 der Platte 84 und der entsprechenden abgesetzten Stirnseite 86 der Hülse 81 ist ein ringförmiger Zwischenraum gebildet, dessen Wände parallel zueinander und senkrecht zu Hauptbelastungsrichtung des Befestigungselements verlaufen. In diesen Zwischenraum kann eine Scheibe aus Elastomermaterial eingelegt werden, ebenso auf der gegenüberliegenden Stirnseite des Kerns 83. Dort ist dies aus Gründen der Vereinfachung nicht dargestellt. Durch Auswahl der Dicke dieser Scheibe und durch Dimensionierung der Scheibe 84 lässt sich auf diese Weise eine Vorspannung in Hauptbelastungsrichtung herstellen und einstellen. Dies bietet eine weitere Möglichkeit, die Belastungs- und Dämmeigenschaften des Befestigungselements zu beeinflussen, ohne seine Geometrie weiter zu verändern. Das Befestigungselement der Figur 9 weist eine von der Stirnseite her gesehen etwa quadratische Form auf, siehe Figur 10. Zur Befestigung des Befestigungselements können an den Ecken angebrachte Bohrungen 87 dienen, bei denen es sich beispielsweise um durchgehende Bohrungen oder um Sacklochbohrungen mit Gewinde handeln kann. Die Verbindung der beiden Teile 81 a, 81 b miteinander kann durch eine solche Verschraubung oder auch durch eine Verschraubung wie bei der Ausführungsform nach Figur 6 erfolgen.

Während bei den bisher behandelten Ausführungsformen implizit davon ausgegangen wurde, dass der Querschnitt der die Wirkungsflächen aufweisenden Teile kreisförmig ist, ist dies kein Erfordernis der Erfindung. Unter einem Konus kann auch ein Element verstanden werden, dessen Querschnitt von der Kreisform abweicht, beispielsweise ein elliptischer Konus. Eine solche Form kann unter anderem dazu dienen, eine Verdrehung um die Hauptbelastungsrichtungsachse zu verhindern, dabei auftretende Drehschwingungen aber auch zu dämpfen.

Die Figuren 11 und 12 zeigen eine weitere Möglichkeit, wie die Wirkungsflächen ausgebildet sein können, um ein Befestigungselement zu schaffen, bei dem auch Drehschwingungen wirksam gedämpft werden können. Das Befestigungselement der Figur 11 und 12 ist im Prinzip genauso aufgebaut wie das Befestigungselement nach Figur 9, auch wenn der Winkel zwischen den Wirkungsflächen 74, 75 einerseits und der Achse der Befestigungsbohrungen 72, 76 andererseits größer ist als bei der Ausführungsform nach Figur 7 und Figur 9. Der Winkel liegt hier beispielsweise bei 60 Grad. Die einander gegenüberliegenden Wirkungsflächen 74, 75 sind ebene Flächen, bilden also jeweils die Flächen eines Pyramidenstumpfes. Dies geht aus Figur 11 hervor, die eine Ansicht einer Hälfte der Hülse der Figur 12 zeigt. Die Wirkungsfläche 75 wird durch in der Aufsicht trapezförmige Flächen gebildet, die durch radial verlaufende Trennungslinien 88 voneinander getrennt sind. Auch bei dieser Art der Ausführungsform tritt bei einer Verdrehung um die Bohrungsachse eine Komprimierung des zwischen den Wirkungsflächen 74, 75 eingelegten Elastomermaterials auf. Hiermit wird also ebenfalls eine Dämpfung in Drehrichtung erreicht.

Figur 13 zeigt eine weitere Ausführungsform, bei der der Kern 90, der eine Gewindebohrung 91 aufweist, an seiner Außenseite ein grobes Gewinde 92 enthält. Er ist in eine Hülse 93 eingeschraubt, die einen Boden 94 mit einer Gewindebohrung 95 enthält. An der Innenseite ist die Hülse 93 mit einem Gegengewinde 96 versehen. Zwischen die Gewindeflanken 97 des Außengewindes 92 des Kerns 90 und die Gewindeflanken 98 des Innengewindes 96 des Kerns 93 kann ein Band aus Elastomermaterial eingelegt werden. In diesem Fall werden die Wirkungsflächen des Kerns und der Hülse, also beider Teilelemente des Befestigungselements, von den Flankenflächen des Gewindes gebildet. Auch hier gibt es eine Hauptbelastungsrichtung, die in Figur 13 von links nach rechts verläuft. Gleichzeitig ist auch eine Bewegung quer zur Hauptbelastungsrichtung gedämpft.

## Patentansprüche

1. Befestigungselement zur Körperschalldämmung, mit
1.1 einem ersten Teilelement (1, 41, 61) mit mindestens einer ersten Wirkungsfläche (7, 8),
1.2 einem zweiten Teilelement mit mindestens einer zweiten der ersten Wirkungsfläche (7, 8) zugewandten Wirkungsfläche (12, 13),
1.3 mindestens einem zwischen den beiden Wirkungsflächen (7, 8, 12, 13) angeordneten komprimierbaren elastomeren Dämmelement (14), das
1.3.1 eine direkte Berührung der beiden Teilelemente (1, 41, 61, 11) verhindert und
1.3.2 im wesentlichen überwiegend bis ausschließlich auf Komprimierung beansprucht wird, wobei
1.4 die Teilelemente (1, 41, 61, 11) mindestens in Belastungsrichtung des Befestigungselements relativ zueinander verschiebbar angeordnet sind, und
1.5 die Komprimierung des Dämmelements (14) mit zunehmender Verschiebung der Teilelemente (1, 41, 61, 11) in Belastungsrichtung zunimmt.

2. Befestigungselement nach Anspruch 1, bei dem die Wirkungsfläche (7,8, 12,13) unter einem spitzen Winkel gegenüber der Belastungsrichtungen verlaufen an.

3. Befestigungselement nach Anspruch 1 oder 2, bei dem die Wirkungsflächen (7, 8, 12, 13) derart angeordnet sind, dass die Kompression des Dämmelements (14) in einer unter einem spitzen Winkel zu der Belastungsrichtung verlaufenden Richtungen erfolgt.

4. Befestigungselement nach einem der vorhergehenden Ansprüche, bei dem das Dämmelement (14) an den Wirkflächen (7, 8,12, 13) lose anliegt.

5. Befestigungselement nach einem der vorhergehenden Ansprüche, mit zwei gegenläufigen Belastungsrichtungen.

6. Befestigungselement nach einem der vorhergehenden Ansprüche, bei dem mindestens ein Teilelement (1, 41, 61, 11) mehr als eine Wirkungsfläche (7, 8, 12, 13, 33) aufweist.

7. Befestigungselement nach einem der vorhergehenden Ansprüche, bei dem mindestens eine Wirkfläche (7, 8, 12, 13) mindestens eines Teilelements (11, 1, 41, 61) konisch bzw. pyramidenförmig verläuft, gegebenenfalls abgestuft.

8. Befestigungselement nach einem der vorhergehenden Ansprüche, bei dem das Dämmelement (14) eine konische oder pyramidenförmige mit einer konischen bzw. pyramidenförmige Wirkfläche (7, 8, 12, 13) eines Teilelements (1, 41, 61, 11) zusammenwirkende Außen- bzw. Innenfläche aufweist.

9. Befestigungselement nach einem der vorhergehenden Ansprüche, bei dem das Dämmelement (14) als zylindrische Hülse ausgebildet und zwischen zwei konischen bzw. pyramidenförmigen Wirkflächen (7, 13, 8, 12) angeordnet ist.

10. Befestigungselement nach einem der Ansprüche 7 bis 9, bei dem der Kegelwinkel zweier einander gegenüberliegender Wirkflächen (7, 13, 8, 12) gleich groß ist.

11. Befestigungselement nach einem der Ansprüche 7 bis 10, bei dem die Kegel bzw. Pyramiden bei mehreren Wirkflächen in der gleichen Richtung orientiert sind.

12. Befestigungselement nach einem der Ansprüche 7 bis 10, bei dem die Kegel bzw. Pyramiden bei mehreren Wirkflächen (7, 8, 12, 13) umgekehrt orientiert sind.

13. Befestigungselement nach einem der Ansprüche 7 bis 10, bei dem der Querschnitt durch den die Konusfläche bildenden Konus rund, insbesondere kreisrund oder elliptisch, ist.

14. Befestigungselement nach einem der vorhergehenden Ansprüche, bei dem die Wirkungsfläche mindestens eines Teilelements (41, 61, 51) glatt ausgebildet ist.

15. Befestigungselement nach einem der vorhergehenden Ansprüche, bei dem die Wirkungsfläche (7, 8, 12, 13) mindestens eines Teilelements (1, 41, 61, 11) Rippen, Rillen, Noppen oder dergleichen aufweist.

16. Befestigungselement nach einem der vorhergehenden Ansprüche, mit einer zweiten quer zur Hauptbelastungsrichtung verlaufenden Belastungs- beziehungsweise Bewegungsrichtung.

17. Befestigungselement nach Anspruch 16, mit einer dritten Belastungsrichtung, bei der es sich insbesondere um eine Verdrehungsrichtung um die Achse der Hauptbelastungsrichtung handelt.

18. Befestigungselement nach einem der vorhergehenden Ansprüche, mit einer Ausfallsicherung, die in mindestens einer Belastungsrichtung wirksam ist, vorzugsweise der Hauptbelastungsrichtung.

19. Befestigungselement nach einem der vorhergehenden Ansprüche, bei dem mindestens eine Wirkungsfläche mindestens eines Teilelements mindestens teilweise auf einer Gewindeflankenfläche liegt

20. Befestigungselement nach einem der vorhergehenden Ansprüche, bei dem eines der Teilelemente (1, 41, 61) eine Hülse mit der Wirkungsfläche (12, 13) an der radialen Innenseite der Hülse ist.

21. Befestigungselement nach einem der vorhergehenden Ansprüche, bei dem eines der Teilelemente (11, 62, 51) ein Kern oder dergleichen mit der Wirkungsfläche an der Mantelfläche ist.

22. Befestigungselement nach Anspruch 20 oder 21, bei dem die Hülse einen Boden (2) aufweist.

23. Befestigungselement nach einem der Ansprüche 20 bis 22, bei dem die Befestigung der Hülse an ihrer axialen Stirnseite und/oder an ihrem Umfang erfolgt.

24. Befestigung nach einem der Ansprüche 20 bis 23, bei dem die Hülse mehrteilig ausgebildet und zerlegbar ist.

25. Befestigungselement nach einem der Ansprüche 21 bis 24, bei dem der Kern eine axiale Gewindebohrung aufweist.

26. Befestigungselement nach einem der Ansprüche 21 bis 25, bei dem der maximale Durchmesser des Kerns größer ist als der minimale Durchmesser der Innenöffnung der Hülse in Belastungsrichtung.

27. Befestigungselement nach einem der vorhergehenden Ansprüche, bei der das Dämmelement (14) vorkomprimiert angeordnet ist.

28. Befestigungselement nach einem der vorhergehenden Ansprüche, bei dem das Dämmelement ein Schlauch aus Elastomermaterial ist.

29. Befestigungselement nach einem der vorhergehenden Ansprüche, bei dem die Wirkungsfläche mindestens eines Teilelements mindestens teilweise auf einer Gewindeflankenfläche liegt.
